Europäisches Patentamt

European Patent Office

Office européen des brevets

(11) Veröffentlichungsnummer: **0 483 935 A2**

# EUROPÄISCHE PATENTANMELDUNG

(21) Anmeldenummer: **91250270.5**

(51) Int. Cl.5: **H04B  10/20**

(22) Anmeldetag: **02.10.91**

(30) Priorität: **01.11.90 DE 4034916**

(43) Veröffentlichungstag der Anmeldung:
**06.05.92 Patentblatt  92/19**

(84) Benannte Vertragsstaaten:
**DE ES FR GB IT NL SE**

(71) Anmelder: **SIEMENS AKTIENGESELLSCHAFT**
**Wittelsbacherplatz 2**
**W-8000 München 2(DE)**

(72) Erfinder: **Reimann, Herbert**
**Sandweg 285**
**W-2900 Oldenburg(DE)**

(54) **Aktiver Stern für ein optisches Übertragungssystem.**

(57)  In optischen Übertragungssystemen werden als Bauelemente u.a. aktive Sterne verwendet, die aus je einem opto-elektrischen Koppler (11,12) für jeden ankommenden Übertragungsweg und aus je einem elektro-optischen Koppler (21,22) für jeden abgehenden Übertragungsweg bestehen und einen Bus (3) aufweisen, mit dem die elektrischen Aus- und Eingänge der Koppler verbunden sind. Um einen solchen aktiven Stern gegen Funktionsausfall durch Fremdlichteinwirkung zu schützen, ist zwischen dem elektrischen Ausgang jedes ankommenden Übertragungsweges und dem Bus eine Schaltung (13,14,15) angeordnet, die bei Fremdlichteinfall in den ankommenden Übertragungsweg die Ankopplung dieses Übertragungsweges an den Bus verhindert.

Ein derart ausgebildeter aktiver Stern ist beispielsweise bei optischen Übertragungssysstemen für Kraftfahrzeuge anzuwenden.

FIG 1

Die Erfindung liegt auf dem Gebiet der optischen Übertragungssysteme und befaßt sich mit der Ausgestaltung eines aktiven Sternes, bei dem die Summenbildung der eingekoppelten Signale nach der opto-elektrischen Wandlung auf der elektrischen Ebene vorgenommen wird.

In optischen Übertragungssystemen müssen Signale in das System eingespeist und für einzelne Teilnehmer aus dem System ausgekoppelt werden. Hierzu werden Koppler eingesetzt, z.B. Sternkoppler. Bei Sternkopplern unterscheidet man passive und aktive Sterne. Während beim passiven Stern die an mehreren Eingängen anstehenden Signale optisch summiert und anschließend das Summensignal für die Ausgänge optisch aufgesplittet wird, erfolgt beim aktiven Stern eine Zwischenverstärkung oder Regeneration der ankommenden Signale unter Anwendung einer optoelektrischen und elektro-optischen Umwandlung. Dabei kann die Summenbildung der verschiedenen Eingangssignale im optischen Teil des Sternes oder nach der opto-elektrischen Wandlung der einzelnen Eingangssignale auf der elektrischen Ebene vorgenommen werden. Im letzteren Fall besteht der aktive Stern aus je einem opto-elektrischen Koppler für jeden ankommenden Übertragungsweg und aus je einem elektro-optischen Koppler für jeden abgehenden Übertragungsweg; weiterhin ist ein Bus vorgesehen, über den die elektrischen Aus- und Eingänge der Koppler miteinander verbunden sind.

Bei der Kommunikation über ein optisches Übertragungssystem, beispielsweise in einem Kraftfahrzeug, mit Hilfe passiver oder aktiver Sterne kann die Funktion des Systems durch ungewollten Lichteinfall stark eingeschränkt werden oder vollständig zum Erliegen kommen. Einfallendes Licht enspricht dabei einem optischen High-Pegel, der die nutzbaren Daten überschreibt. Ein solcher ungewollter Lichteinfall kann beispielsweise durch das Lösen einer optischen Steckverbindung oder durch die Beschädigung eines optischen Leiters hervorgerufen werden. Eine weitere Ausfallursache für optische Sterne kann ein Fehler in der Ansteuerung einer Sende-Diode sein, der diese zum Aussenden von Dauerlicht veranlaßt.

Ausgehend von einem aktiven Stern mit den Merkmalen des Oberbegriffes des Patentanspruches 1 liegt der Erfindung die Aufgabe zugrunde, diesen so auszugestalten, daß er gegen Funktionsausfall durch Fremdlichteinwirkung geschützt ist.

Zur Lösung dieser Aufgabe ist gemäß der Erfindung vorgesehen, daß zwischen dem elektrischen Ausgang Jedes ankommenden Übertragungsweges und dem Bus eine Freigabeschaltung angeordnet ist, deren erster Eingang direkt mit dem Ausgang des optoelektrischen Kopplers gekoppelt ist und deren zweiter Eingang mit dem Ausgang des opto-elektrischen Kopplers indirekt über eine Auswerteschaltung gekoppelt ist, welche bei einem Störsignal die Freigabe des Signalweges blockiert. Eine solche Auswerteschaltung kann aus einem steuerbaren Oszillator und einen retriggerbaren Monoflop bestehen.

Bei einer derartigen Ausgestaltung des aktiven Sterns ist somit gewährleistet, daß bei Fremdlichteinfall in einen Übertragungsweg jeweils nur dieser defekte oder gestörte Kanal in Senderichtung ausfällt. Auf den anderen Kanälen des aktaiven Sterns kann dagegen weiterhin ein ungestörter Datenverkehr erfolgen.

Um den aktiven Stern auch gegen schnelle dynamische Störungen abzusichern, wie sie beispielsweise durch schnell wechselnden Sonnenlichteinfall bei fahrendem Fahrzeug oder durch einen Wackelkontakt im Sender des optischen Übertragungssystems gegeben sind, ist in Weiterbildung der Erfindung eine Zeitschaltung zur Unterstützung der Auswerteschaltung vorgesehen. Diese Zeitschaltung kann aus einem weiteren Monoflop bestehen, der den zweiten Ausgang des retriggerbaren Monoflop auf den UND-Eingang des retriggerbaren Monoflop rückkoppelt. Im Falle einer dynamischen Störung wird durch diesen Zusatz die Wiederzuschaltung des optischen Einganges zum übrigen Bereich des aktiven Sternes länger verzögert. Während dieser Verzögerung ist ein ungestörter Datenverkehr im übrigen Bereich des aktiven Sterns möglich.

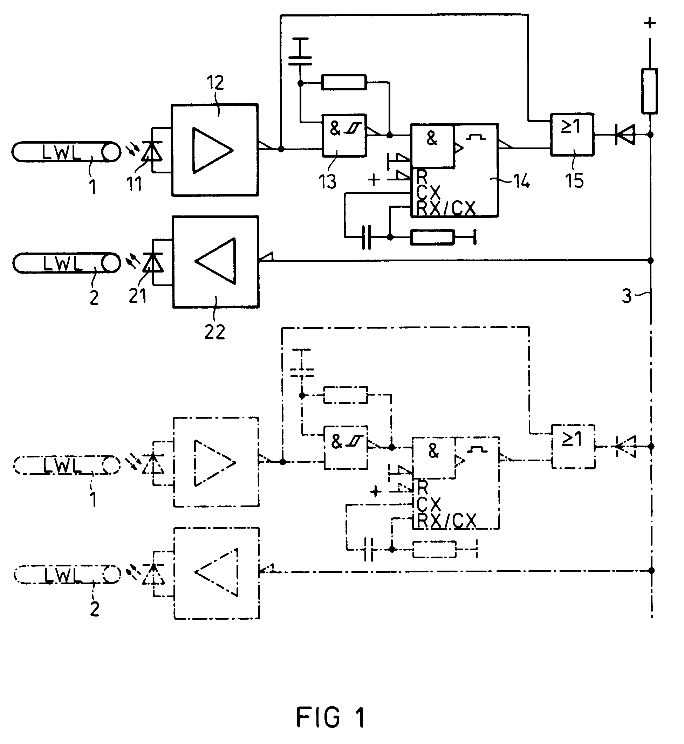

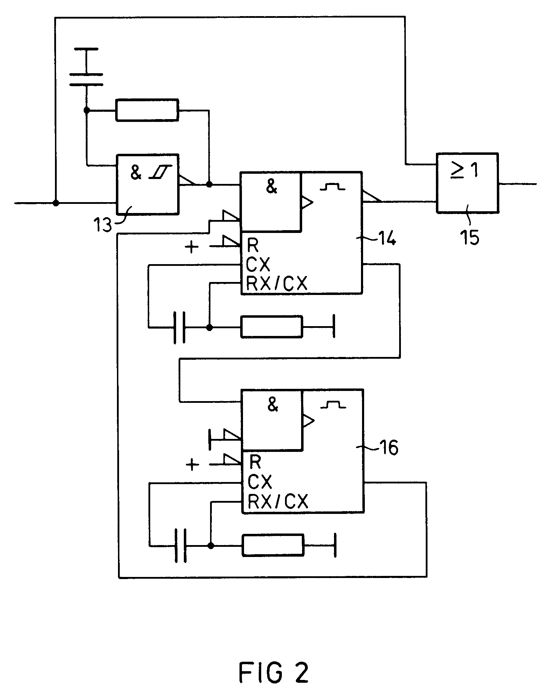

Zwei Ausführungsbeispiele des neuen aktiven Sterns sind in den Figuren 1 und 2 dargestellt. Dabei zeigt

Figur 1 die zwischen dem opto-elektrischen Wandler und dem Bus angeordnete Schutzschaltung, während

Figur 2 die Ergänzung dieser Schutzschaltung für den Fall des Schutzes gegen dynamische Störungen darstellt.

Gemäß Figur 1 werden einem bezüglich seiner Funktion dargestellten aktiven Stern eines optischen Übertragungssystems über Lichtwellenleiter 1 optische Signale zugeführt. Diese werden je Übertragungsweg von einem opto-elektrischen Wandler 11 aufgenommen und einem Verstärker oder Regenerator 12 zugeführt. Das Ausgangssignal des aus Wandler 11 und Verstärker 12 bestehenden Kopplers wird aufgeteilt und zum einen dem einen Eingang einer Freigabeschaltung 15 direkt zugeführt, bei der es sich um ein ODER-Glied handelt. Das Ausgangssignal 12 wird zum anderen einer aus den Schaltgliedern 13 und 14 bestehenden Auswerteschaltung zugeführt. Bei diesen Schaltgliedern handelt es sich um einen steuerbaren Oszillator 13 in Form eines UND-Gliedes mit Schmitt-Trigger-Eingang und um einen retriggerbaren Monoflop 14. Diese Auswerteschaltung führt auf den zweiten Eingang der Freigabeschaltung 15.

Das Ausgangssignal der Freigabeschaltung 15 wird über eine Diode dem Bus 3 zugeführt, dem in gleicher Weise die Eingangssignale der übrigen ankommenden Lichtwellenleiter zugeführt werden und von dem das Summensignal über die elektro-optischen Koppler 22/21 dem Lichtwellenleiter 2 des abgehenden Übertragungsweges zugeführt werden.

Mit Hilfe der Freigabeschaltung 15 erfolgt somit die Freigabe oder Nichtfreigabe eines über den Lichtwellenleiter 1 ankommenden optischen Signals auf den Bus 3. Hierzu werden der Oszillator 13 und das retriggerbare Monoflop 14 in folgender Weise gesteuert:

Das Ausgangssignal des opto-elektrischen Kopplers 11/12 liegt am Steuereingang des Oszillators 13 an. Der Oszillator 13 stoppt, solange das optische Signal auf "High" (Licht ein) ist. Dadurch beginnt das nachfolgende retriggerbare Monoflop 14 abzulaufen und wird durch jeden nachfolgenden optischen "Low"-Pegel zurückgesetzt. Ist nun das optische Eingangssignal länger als eine definierbare Zeitspanne, beispielsweise eine Telegrammlänge, auf High, so läuft das Monoflop 14 ab und sperrt über den zweiten Eingang der Freigabeschaltung 15 den Signalweg für diesen Eingang. - Ist dagegen das optische Eingangssignal auf "Low" (Licht aus), so wird das retriggerbare Monoflop 14 laufend zurückgesetzt, so daß es kein Sperrsignal auf die Freigabeschaltung 15 geben kann.

Gemäß Figur 2 ist in dem Signalweg über die Schaltglieder 13, 14 und 15 ein weiteres Schaltglied 16 in Form eines zusätzlichen Monoflop vorgesehen, welches durch den Ausgang des retriggerbaren Monoflops 14 gesteuert wird. Das Ausgangssignal des Schaltgliedes 16 wirkt auf den UND-Eingang des Schaltgliedes 14 zurück. Im Falle einer dynamischen Störung des über den Lichtwellenleiter 1 zugeführten Eingangssignals wird durch das zusätzliche Schaltglied 16 die Wiederzuschaltung des Eingangssignals über das Schaltglied 15 auf den Bus 3 länger verzögert. Während dieser Verzögerung ist im übrigen Bereich des aktiven Sterns ein ungestörter Datenverkehr möglich.

**Patentansprüche**

1. Aktiver Stern für ein optisches Übertragungssystem,
   bestehend aus je einem opto-elektrischen Koppler für jeden ankommenden Übertragungsweg und aus je einem elektro-optischen Koppler für jeden abgehenden Übertragungsweg,
   wobei die elektrischen Aus- und Eingänge der Koppler über einen Bus miteinander verbunden sind,

   **dadurch gekennzeichnet,**
   daß zwischen dem elektrischen Ausgang jedes ankommenden Übertragungsweges und dem Bus (3) eine Freigabeschaltung (15) angeordnet ist, deren erster Eingang direkt mit dem Ausgang des opto-elektrischen Kopplers (11,12) gekoppelt ist und deren zweiter Eingang mit dem Ausgang des opto-elektrischen Kopplers indirekt über eine Auswerteschaltung gekoppelt ist, welche bei einem Störsignal die Freigabe des Signalweges blockiert.

2. Aktiver Stern nach Anspruch 1, **dadurch gekennzeichnet,** daß die Auswerteschaltung aus einem steuerbaren Oszillator und einem retriggerbaren Monoflop (14) besteht.

3. Aktiver Stern nach Anspruch 1 oder 2, **gekennzeichnet durch** eine Zeitschaltung zur Unterstützung der Auswerteschaltung.

4. Aktiver Stern nach Anspruch 3, **dadurch gekennzeichnet,** daß die Zeitschaltung aus einem weiteren Monoflop (16) besteht, der den zweiten Ausgang des retriggerbaren Monoflop (14) auf den UND-Eingang des retriggerbaren Monoflop rückkoppelt.

FIG 1

FIG 2